# EUROPEAN PATENT APPLICATION

(11) **EP 2 143 699 A1**
(43) Date of publication of application: **13.01.2010**
(21) Application number: 08721678.4
(22) Date of filing: 10.03.2008
(51) Int. Cl.: C04B 41/85, B01D 39/20, B01J 35/04

(54) **HONEYCOMB CONSTRUCTION AND COATING MATERIAL TO BE USED THEREIN**

(30) Priority: 16.03.2007 JP 2007068459
(71) Applicant: NGK Insulators, Ltd., Nagoya-shi, Aichi 467-8530 (JP)
(72) Inventor: ICHIKAWA, Shuichi, Nagoya-shi Aichi 467-8530 (JP); WATANABE, Atsushi, Nagoya-shi Aichi 467-8530 (JP); SATO, Fumiharu, Nagoya-shi Aichi 467-8530 (JP)
(74) Representative: Paget, Hugh Charles Edward
(86) International application number: PCT/JP2008/054262
(87) International publication number: WO 2008/114636

(57) **Abstract**

It is intended to obtain a honeycomb structure having an equivalent performance as ceramic fibers where possible influences on the human body should be considered in the case that a particle diameter, a composition, and an existence form satisfy conditions within fixed values. It is also intended to provide a coating material usable as a substitute for ceramic fibers as a coating material forming the outer peripheral wall of a honeycomb structure. There is provided a honeycomb structure 2 made of ceramic, wherein a coating material constituting an outer peripheral wall 5 of the honeycomb structure 2 contains biosoluble fibers.

## Description

### Technical Field

The present invention relates to a honeycomb structure and a coating material used therefor. More specifically, the present invention relates to a honeycomb structure whose environment safety is improved by containing biosoluble fibers.

### Background Art

A honeycomb structure made of ceramic is used as a catalyst carrier making use of a catalytic function for an internal combustion engine, a boiler, a chemical reactor, a reformer for a fuel cell, or the like; a trapping filter for particulate matter in exhaust gas, in particular, diesel particulate matter (diesel particulate filter: hereinbelow sometimes referred to as a "DPF"); etc.

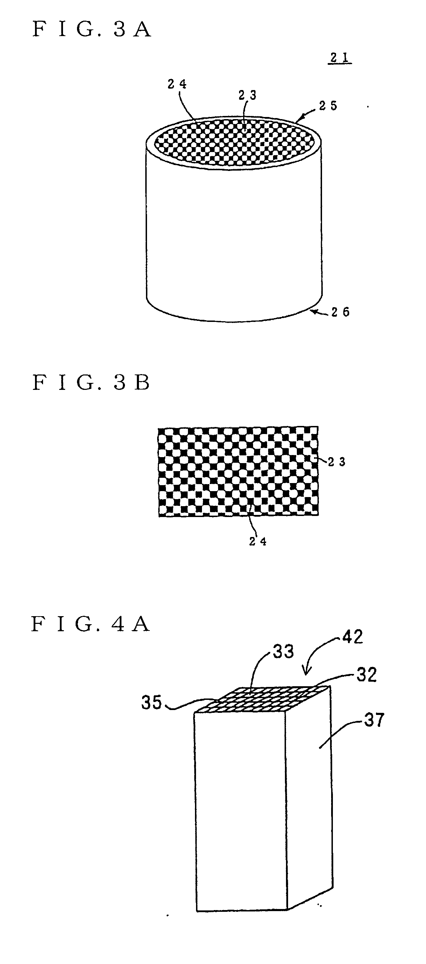

As shown in Figs. 3A and 3B, a honeycomb structure used for such a purpose generally has a plurality of cells 23 separated by porous partition walls 24 and functioning as fluid passages and has a structure where adjacent cells 23 are plugged in one end portion on a mutually opposite side in such a manner that each end face shows a checkerwise pattern. In a honeycomb structure 21 having such a structure, a fluid to be treated flows into the cells 23 unplugged on the inflow hole side end face 25, that is, the cells 23 plugged on the outflow hole side end face 26, passes through the porous partition walls 24, and discharged from the adjacent cells 23, that is the cells 23 plugged on the inflow hole side end face 25 and unplugged on the outflow hole end face 26. At this time, partition walls 24 functions as a filter. For example, in the case of using the structure as a DPF, particulate matter (hereinbelow sometimes referred to as "PM") such as soot discharged from a diesel engine is trapped by the partition walls 24 and deposited on the partition walls 24.

A honeycomb structure used in this manner has an uneven temperature distribution therein due to rapid temperature change of exhaust gas or local heat generation to have a problem of crack generation or the like in the honeycomb structure. In particular, when the structure is used as a DPF, it is necessary to combust and remove deposited particulate matter such as soot for regeneration. At this time, local temperature rise is caused to cause problems of decrease in regeneration efficiency due to uneven regeneration temperature and easy crack generation due to high thermal stress.

By the way, in the case that a ceramic honeycomb structure having a plurality of cells extending through the structure is used as a dust-trapping filter used at high temperature in a corrosive gas atmosphere, such as a diesel particulate filter (DPF) for trapping particulate matter (PM) discharged from a diesel engine, an uneven temperature distribution is caused inside the structure and thermal stress functions due to local heat generation according to extraordinary PM combustion, thermal shock caused by the rapid temperature change of exhaust gas. As a result, the ceramic honeycomb structure may have crack generation or melting.

Therefore, there has been proposed a method where honeycomb segments obtained by dividing a honeycomb structure are bonded with a bonding material. Specifically, there is disclosed a method for manufacturing a honeycomb structure, where a large number of honeycomb articles (segments) are bonded with a discontinuous bonding material (see, e.g., Patent Document 1).

In addition, there has been proposed a method for manufacturing a thermal shock resistant rotary thermal storage ceramic heat exchanger, where matrix segments made of a ceramic material and having a honeycomb structure are formed by extrusion, followed by firing, and, after the outer peripheral portion is processed to be flat and smooth, a ceramic bonding material having substantially the same mineral composition after firing as that of the matrix segment and a difference in thermal expansion coefficient of 0.1% or less at 800°C from that of the matrix segment is applied on the bonding portion, followed by firing (see, e.g., Patent Document 2).

Further, there is disclosed a ceramic honeycomb structure obtained by bonding cordierite honeycomb segments with cordierite cement (see, e.g., non-Patent Document 1).

On the other hand, since a ceramic honeycomb structure having such structural characteristics has thin partition walls and high porosity, it has a problem of low mechanical strength. Therefore, in a large-sized ceramic honeycomb structure, a reinforcing means is disposed in order to improve mechanical strength and inhibit deformation, breakage, or the like upon use. For example, there has been proposed a method by improving mechanical strength of a ceramic honeycomb structure by providing an outer wall in the outer periphery of the cell structure of the honeycomb structure (see, e.g., Patent Document 3).

However, according to the aforementioned invention, there is a case of crack generation in the outer wall provided in the outer periphery of the cell structure or peeling of the outer wall itself to cause a problem of deterioration in mechanical strength of the ceramic honeycomb structure. Further, when a catalyst is tried to load on partition walls of a ceramic honeycomb structure having such a crack caused in the outer peripheral wall, there is a problem of leakage of a catalyst solution from the crack in the step of loading the catalyst. In addition, upon applying a coating material on the outer periphery of the cell structure, there is a case of poor applicability such as easy peeling due to poor wettability of the applied coating material, which causes a problem of low production yield.

In order to solve these problems, the present applicant proposed a coating material capable of forming an applied wall (outer wall) where a defect such as crack generation, peeling, or the like is hardly caused with good production yield and a ceramic honeycomb structure where a defect such as crack generation in the outer wall, peeling of the outer wall, or the like is hardly caused (see Patent Document 4). The document has a description that this coating material contains a cordierite powder having a predetermined bulk density and water and is constituted of a material further containing ceramic fibers, silica sol, alumina sol, and the like.

However, it had to be considered that a conventional ceramic fiber used above may influence on a human body when a particle diameter, a composition, and an existence form satisfy conditions within fixed values. Therefore, a completely new approach has been required regarding manufacture of a honeycomb structure with health in mind.

As a means to solve such a problem, there has been proposed a structure formed of nonwoven fabric using a biosoluble fibers as a honeycomb structure using a biosoluble fiber. This honeycomb structure is formed by alternately piling up flat-plate shaped nonwoven fabric and corrugate unwoven fabric. The unwoven fabric is made from biosoluble fibers and a binder (see Patent Document 5). Therefore, the presence of the binder is indispensable, and the unwoven fabric could not be used in a honeycomb structure and the coating material (outer periphery coating material) therefor. In addition, because of 800°C or more of heat resistance of the nonwoven fabric, it did not have sufficient durability upon use at 1200°C or more, which is required for a ceramic honeycomb structure such as a catalyst carrier using catalytic function such as an internal combustion engine, a boiler, a chemical reactor, and a reformer for a fuel cell; or a particulate in exhaust gas, DPF.

Patent Document 1: U.S. Patent No. 4335783
Patent Document 2: JP-B-61-51240
Patent Document 3: JP-B-51-44713
Patent Document 4: JP-A-2004-231506
Patent Document 5: JP-A-2003-105662
Non-Patent Document 1: SAE Lucubration 860008 (1986)

### Disclosure of the Invention

The present invention has been made in view of such conventional problems and aims to obtain a honeycomb structure having an equivalent performance as ceramic fibers conventionally used as a preferable material, where it is not at all necessary to consider possible influences on the human body. Further, the present invention aims to propose a coating material using fibers where it is not at all necessary to consider possible influences on the human body as a coating material forming the outer wall of a honeycomb structure.

As a result of continuation of the inventors' earnest study to solve the aforementioned problems, it reached the following invention. That is, it is the following honeycomb structure and a coating material used for manufacturing the honeycomb structure.

[1] A honeycomb structure made of ceramic, wherein a coating material constituting an outer peripheral wall of the honeycomb structure contains biosoluble fibers.

[2] The honeycomb structure according to [1], wherein a plurality of honeycomb segments provided with a cell structure having a plurality of cells separated by porous partition walls and functioning as fluid passages and a porous outer wall disposed in an outer periphery of the cell structure are unitarily bonded by a bonding material at the outer walls.

[3] The honeycomb structure according to [1] or [2], wherein the biosoluble fibers has thermal resistance at a temperature of 1200°C or more.

[4] The honeycomb structure according to any one of [1] to [3], wherein the biosoluble fibers contains 60 to 95 mass% of SiO₂.

[5] The honeycomb structure according to any one of [1] to [4], wherein an alkali metal oxide content of the biosoluble fibers is 2 mass% or less.

[6] The honeycomb structure according to any one of [1] to [5], wherein the coating material contains inorganic particles and/or colloidal oxide.

[7] The honeycomb structure according to any one of [1] to [6], wherein the inorganic particles contained in the coating material is silicon carbide.

[8] The honeycomb structure according to any one of [1] to [7], wherein the coating material contains an inorganic binder.

[9] The honeycomb structure according to any one of [1] to [8], wherein the coating material contains an organic binder.

[10] The honeycomb structure according to any one of [1] to [9], wherein the biosoluble fibers have an average length of 10 to 600 µm and average diameter of 0.1 to 10 µm.

[11] The honeycomb structure according to any one of [1] to [10], wherein slurry of the coating material has a pH of 0.5 to 10.

[12] The honeycomb structure according to any one of [1] to [11], wherein the coating material has a four-point bending strength of 100 to 3000 kPa.

[13] The honeycomb structure according to any one of [1] to [12], wherein the coating material has a thermal conductivity of 0.1 to 10 w(mK)⁻¹.

[14] The honeycomb structure according to any one of [1] to [13], wherein the coating material has a thermal expansion coefficient of 1 to 8 × 10⁻⁶ K⁻¹.

[15] The honeycomb structure according to any one of [1] to [14], wherein the coating material has a heat capacity of 400 to 4500 J·m⁻³·K⁻¹.

16. The honeycomb structure according to any one of [1] to [15], wherein the coating material has a porosity of 17 to 70%.

17. The honeycomb structure according to any one of [1] to [16], wherein the coating material has a bulk density of 0.5 to 3 g·cm⁻³.

18. The honeycomb structure according to any one of [1] to [17], wherein the coating material has a thickness of 0.01 to 5 mm.

19. A coating material having a thermal resistance of 1200°C or more and containing 60 to 95 mass% of SiO₂.

Since, in a honeycomb structure of the present invention, the outer peripheral wall of the honeycomb structure is formed by the use of a coating material containing components where it is not at all necessary to consider possible influences on a human body, it is not necessary to consider influences on a human body, and the honeycomb structure exhibits an effect of being able to obtain a honeycomb structure having an equivalent performance as ceramic fibers which have conventionally been used.

### Brief Description of the Drawings

[Fig. 1] Fig. 1 is a cross-sectional view obtained by cutting the cell structure along a plane perpendicular to the central axis thereof.
[Fig. 2] Fig. 2 is a cross-sectional view obtained by cutting the honeycomb structure along a plane perpendicular to the central axis thereof.
[Fig. 3A] Fig. 3A is a perspective view of a honeycomb structure, explaining a general honeycomb structure.
[Fig. 3B] Fig. 3B is a partially enlarged plan view of an end face of a honeycomb structure, explaining a general honeycomb structure.
[Fig. 4A] Fig. 4A is a perspective view of a honeycomb segment, explaining an embodiment of a honeycomb structure of the present invention.
[Fig. 4B] Fig. 4B is a perspective view of a honeycomb structure, explaining an embodiment of a honeycomb structure of the present invention.
[Fig. 4C] Fig. 4C is a top view of a honeycomb structure, explaining an embodiment of a honeycomb structure of the present invention.

### Description of Reference Numerals

1: Cell structure, 2: honeycomb structure, 3: cell, 4: partition wall, 5: outer peripheral wall, 7a, 7b: coating material, 9: outer peripheral portion, 21: honeycomb structure, 23: cell, 24: partition wall, 25: inlet hole side end face, 26: outlet hole side end face, 30: honeycomb structure, 32: porous partition wall, 33: cell, 35: cell structure, 37: outer peripheral wall, 38: bonding layer, 42: honeycomb segment

### Best Mode for Carrying out the Invention

Hereinbelow, an embodiment of the present invention will be described. However, the present invention is not limited to the following embodiment, and it should be understood that changes, improvements, and the like may suitably be made on the basis of ordinary knowledge of a person of ordinary skill within the range of not deviating from the gist of the present invention.

A honeycomb structure of the present invention is constituted of ceramic and **characterized in that** the coating material constituting the outer peripheral wall of the honeycomb structure contains biosoluble fibers. The honeycomb structure is provided with a cell structure having a plurality of cells separated by porous partition walls and functioning as fluid passages and a porous outer wall disposed in the outer periphery of the cell structure.

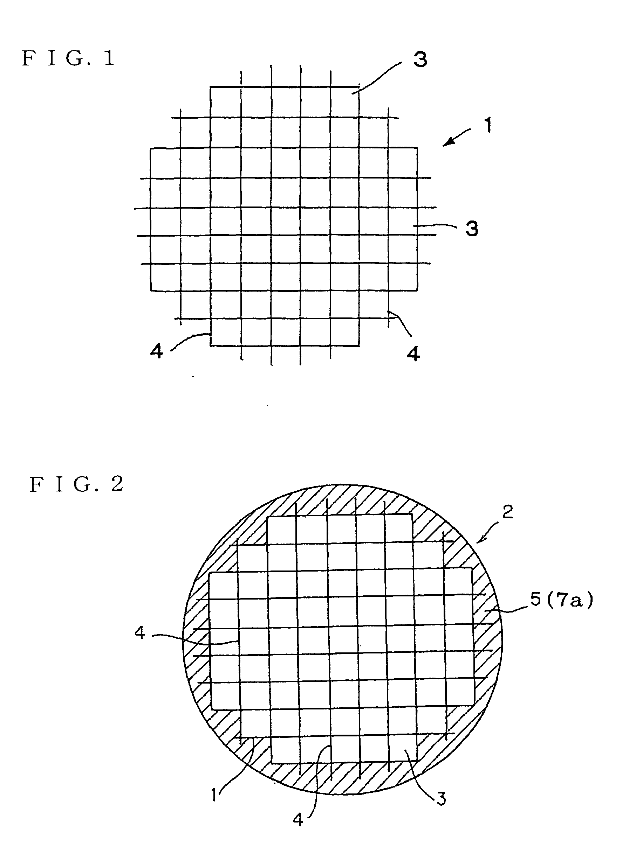

As shown in Fig. 1, a cell structure 1 which is a constituent of the honeycomb structure is of porous article having a large number of pores and formed into a honeycomb shape having a plurality of cells 3 functioning as fluid passages by being separated by very thin partition walls 4. Though the material is not particularly limited, it is necessary to be a porous article having a large number of pores. Therefore, generally, there is suitably used a sintered article of ceramic such as cordierite, silicon carbide, silicon nitride, alumina, mullite, zirconia, zirconium phosphate, aluminum titanate, titania, or the like; in particular, a sintered article of cordierite. A sintered article of cordierite is preferable in that it has a small thermal expansion coefficient and excellent thermal shock resistance and mechanical strength.

In addition, as shown in Fig. 2, a ceramic honeycomb structure 2 is provided with a cell structure 1 and an outer peripheral wall 5 formed so as to cover the outer periphery of the cell structure 1. The outer peripheral wall 5 is constituted of a coating material 7a.

In the present invention, "biosoluble fibers" contained in the coating material constituting the outer peripheral wall of the honeycomb structure means fibers which are nondurable in physiological liquid and out of control subjects of carcinogenesis classification. Examples of the physiological liquid include a normal saline (0.9% sodium chloride solution), a buffer solution, a pseudohumor, and blood serum. The pseudohumor is an aqueous solution almost the same as the human plasma component.

A "fiber" means a material having length larger than width. In a specific embodiment, fibers can suitably be selected and used according to the purpose from fibers having a length of at least five times, at least 10 times, and at least 100 times larger than the diameter.

Generally, a biosoluble fiber dissolves or substantially dissolves in physiological liquid within about one year. "Substantially dissolves" means that at least about 75 mass% dissolves.

Biosoluble fibers used in the present embodiment generally contains, for example, Na₂O K₂O CaO, MgO, P₂O₅, Li₂O, and BaO, or an inorganic oxide such as a combination of these and silica. Other metal oxides or other ceramic components may be contained in the biosoluble fibers. However, these components do not have desired solubility by themselves and are present at a sufficiently small amount where the fibers as a whole can decomposable in physiological liquid. Examples of the metal oxide include Al₂O₃, TiO₂, ZrO₂, B₂O₃, and ferric oxide. In addition, biosoluble fibers can contain metal components at an amount where the fibers are decomposable in physiological liquid.

The biosoluble fibers used in the present embodiment preferably contains 60 mass% or more, particularly preferably contains 65 to 95 mass%, of SiO₂. The biosoluble fibers having such a composition is preferable because they solidify fibers when an inorganic binder is used in the bonding material, thereby exhibiting sufficient strength, and they are particularly preferable for imparting thermal resistance.

Further, in biosoluble fibers used in the present embodiment, an alkali metal oxide content is preferably 2 mass% or less. Here, examples of the alkali metal oxide include Na₂O and K₂O. When the alkali metal oxide content is 2 mass% or less, strength of the bonding material upon use at high temperature, for example, 1200°C or more can be inhibited from decreasing.

Examples of the biosoluble fibers used in the present embodiment include fibers containing silica, magnesium, or oxides of silica, magnesium, and calcium. Such a fiber is generally called magnesium silicate fiber or calcium magnesium silicate fiber.

A biosoluble fiber is sold under a trade name of, for example, Superwool produced by Shinnikka Thermal Ceramics Corporation. For example, Superwool 607 contains 60 to 70 mass% SiO₂, 25 to 35 mass% CaO, 4 to 7 mass% MgO and a slight amount of Al₂O₃. Superwool 607 Max contains 60 to 70 mass% SiO₂, 16 to 22 mass% CaO, 12 to 19 mass% MgO and a slight amount of Al₂O₃.

The biosoluble fibers used in the present embodiment can have various average diameters and average lengths. For example, commercially available fibers have an average fiber diameter within the rage from about 0.05 to about 15 µm. In particular, a biosoluble fiber having an average fiber diameter within the range of 0.1 to 10 µm can suitably be used. The average length in the long axial direction is preferably 10 to 600 µm, more preferably 50 to 400 µm. When the average length in the long axial direction is below 10 µm, it may be impossible to impart elasticity to the bonding layer of the bonding material. When it is above 600 µm, applicability may be decreased.

Though a coating material used in the present invention contains biosoluble fibers, it is preferable that, for example, an inorganic binder, an organic binder, inorganic particles, and a resin balloon are further contained.

Examples of the inorganic binder used in the present invention include silica sol and alumina sol. These may be used alone or in combination of two or more kinds.

Examples of the organic binder includes polyvinyl alcohol (PVA), carboxymethyl cellulose (CMC), and methyl cellulose (MC). It has an effect in stabilizing slurry viscosity of the coating material and imparting strength in the drying step. Examples of inorganic particles include ceramics such as silicon carbide, silicon nitride, cordierite, alumina, and mullite.

As the cordierite, a cordierite powder having a tap bulk density of 1.3 g/cm³ or more is preferable. When a slurried (or pasty) coating material containing such a cordierite powder and water is applied on the outer periphery of the cell structure, a coating material layer is formed in the first place by the contact of coating material with the porous article. Right after the formation of the coating material layer, part of the water contained in the coating material layer is absorbed by the cell structure as the porous article. According to the absorption, a thin dense layer is formed by the ultimate vicinity of the face of the porous article in contact with the coating layer by minute components (fine particles) and coarse components (coarse particles) in the cordierite powder contained in the coating layer. Since the dense layer formed inhibits further water absorption by the cell structure, rapid water movement in the coating material layer formed with the coating material is inhibited, and the difference in water content rate depending on the portions is hardly generated in the coating material layer formed by the applied coating material. As a result, the contraction difference in the portions inside the coating material layer in the drying step is hardly generated, and an effect in inhibiting a defect such as crack generation in the outer wall to be formed and peeling of the outer wall is exhibited.

When the tap bulk density of the cordierite powder is below 1.3 g/cm³, a defect such as crack generation in the outer wall to be formed and peeling of the outer wall may easily be caused. From the viewpoints of effectively inhibiting generation of a defect such as crack generation in the outer wall and peeling of the outer wall and manufacturing honeycomb structures with higher yield, the tap bulk density of the cordierite powder is preferably 1.34 g/cm³ or more, more preferably 1.39 g/cm³ or more.

In addition, paste of the coating material used in the present invention has a pH of generally 0.5 to 10, preferably 2 to 8. When the pH is below 0.5 or above 10, stability of the coating material is decreased, and applicability is decreased. In addition, because bonding of inorganic binders such as silica sol and alumina sol is hindered, there is a problem of easily causing a crack in the coating material.

The coating material used in the present invention has a four-point bending strength of preferably 100 to 3000 kPa. When the four-point bending strength is below 100 kPa, strength in the outer wall portion cannot be secured in a honeycomb structure where a plurality of honeycomb segments are integrated by a bonding material layer, and a crack is generated in the outer wall portion due to rapid thermal stress generated upon regeneration of a DPF. On the other hand, when the four-point bending strength is above 3000 Mpa, stress cannot be relaxed, and breakage may be caused due to crack generation in a segment due to rapid thermal stress generated upon regeneration of a DPF. More preferable four-point bending strength is 500 to 2000 kPa.

The coating material used in the present invention has a porosity of 17 to 70%, more preferably 22 to 54%. When the porosity is below 17%, the Young' s modulus increases, and it may be impossible to sufficiently exhibit a stress relaxation function. When it is above 70%, strength of the outer wall may be decreased.

The coating material used in the present invention has a bulk density of preferably 0.5 to 3 g/cm³ more preferably 0.8 to 2 g/cm³ When the bulk density is above 3 g/cm³, the Young's modulus increases, and it may be impossible to sufficiently exhibit a stress relaxation function. When it is below 0.5 g/cm³, strength of the outer wall may be decreased.

The coating material used in the present invention has a thermal conductivity of 0.1 to 10 W/mK, more preferably 0.3 to 5 W/mK. When the thermal conductivity is below 0.1 W/mK, the highest temperature upon regeneration tends to increase by functioning as a heat-insulating layer around the honeycomb structure. When the thermal conductivity is above 10 W/mK, regeneration efficiency may be decreased by escape of heat in the outer peripheral portion of the honeycomb structure.

The coating material used in the present invention has a thermal expansion coefficient of 1 to 8 × 10⁻⁶ K⁻¹, more preferably 3 to 6 × 10⁻⁶ K⁻¹. When the thermal expansion coefficient of the coating material is below 1x 10⁻⁶ K⁻¹, a crack is easily generated in the interface between the coating material layer and the cell structure upon regeneration due to thermal expansion coefficient mismatch between the honeycomb segment material and the coating material. When the thermal expansion coefficient of the coating material is above 8 × 10⁻⁶K⁻¹, a crack is easily generated in the coating material upon regeneration.

The coating material used in the present invention has a heat capacity of preferably 250 to 4500 Jm³K⁻¹, more preferably 500 to 3000 Jm³K⁻¹. When the heat capacity of the coating material is below 250 Jm³K⁻¹, the highest temperature upon regeneration may be high to easily cause a crack. When the heat capacity of the coating material is above 4500 Jm³K⁻¹, temperature in the outer peripheral portion does not rise upon regeneration to decrease regeneration efficiency.

In the present invention, there is no particular limitation on the thickness of the coating material layer. However, when it is too thick, pressure loss upon passage of exhaust gas increases, while, when it is too thin, the coating material can not exhibit sufficient soot-trapping performance, which are not preferable. The coating material has a thickness of preferably 0.01 to 5.0 mm, more preferably 0.1 to 3.0 mm.

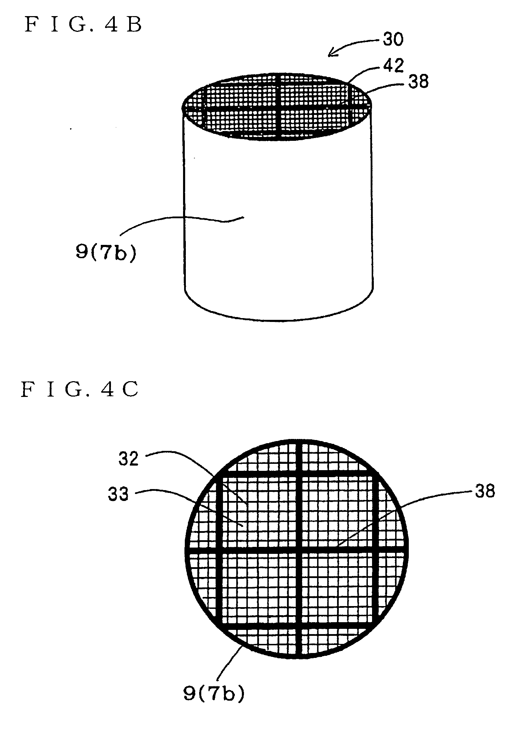

In the case that a honeycomb structure of the present invention is obtained by integrating a plurality of honeycomb segments with a bonding material, as shown in Figs. 4A to 4C, a honeycomb structure 30 can be integrated by bonding a plurality of honeycomb segments 42 each having a cell structure 35 separated by porous partition walls 32 and functioning as fluid passages and the porous outer peripheral walls 37 disposed in the outer periphery of the cell structure 35 with a bonding material at the outer peripheral walls 37. In the honeycomb structure 30 of the present embodiment, the bonding material is dried to form a bonding layer 38 on the outer peripheral wall 37, and the outer peripheral walls 37 are bonded together by means of the bonding layer 38. Further, in the outer peripheral portion 5 of the honeycomb structure 30, a coating material 7b containing biosoluble fibers is applied.

There is no particular limitation on the cell density (the number of cells per unit cross-sectional area perpendicular to the passages) of the honeycomb segment. However, when the cell density is too low, geometric surface area is insufficient, while, when it is too high, pressure loss becomes too large, which are not preferable. The cell density is preferably 0.9 to 310 cells/cm² (6 to 2000 cells/in²) . In addition, there is no particular limitation on the shape of the cross section (cross section perpendicular to the passages) of the cells, and there may be employed any shape such as a polygon such as a triangle, a quadrangle, and a hexagon; a combination of an octagon and a quadrangle; a circle; an oval; or a corrugated shape. However, from the viewpoint of manufacture, a triangle, a quadrangle, a hexagon, or a combination of an octagon and a quadrangle is preferable. Though there is no particular limitation on the thickness of the partition walls, strength as a honeycomb segment is insufficient when it is too thin, and pressure loss becomes too large when it is too thick, which are not preferable. The thickness of the partition walls is preferably 50 to 2000 µm.

In addition, there is no particular limitation on the shape of the honeycomb segment, and any shape may be employed. For example, it is preferable to employ a quadrangular prism as shown in Fig. 4A as a basic form, unitarily join the honeycomb segments as shown in Fig. 4B, and adjust the shape of the honeycomb segments 42 constituting the outermost peripheral face of the honeycomb structure 30 to the outer peripheral shape of the honeycomb structure 30. A cross-sectional shape perpendicular to the passages of each honeycomb segment may be a fan-like form.

In addition, there is no particular limitation on the shape of a cross section perpendicular to the passages of the honeycomb structure, and there may be employed any shape such as a circle such as a perfect circle, an oval, and an ellipse; a polygon such as a triangle, a quadrangle, and an pentagon; an irregular shape; or the like. Further, in the case that a honeycomb structure of the first invention is used as a catalyst carrier incorporated in an internal combustion engine, a boiler, a chemical reactor, a reformer for a fuel cell, or the like; it is also preferable to load metal having catalytic ability on the honeycomb structure. Examples of the metal having catalytic ability include platinum (Pt), palladium (Pd), and rhodium (Rd). It is preferable to load at least one of them on the honeycomb structure.

On the other hand, in the case of using a honeycomb structure of the present invention as a filter for trapping and removing particulate matter (soot) contained in exhaust gas like DPF, it is preferable that an opening portion of each of predetermined cells is plugged on one end face, while an opening portion of each of the other cells is plugged on the other end face and that adjacent cells are plugged in mutually opposite end portions in such a manner that each end face shows a checkerwise pattern. By such plugging, for example, exhaust gas containing soot flowing in from one end face side of the honeycomb structure passes through partition walls and flows out from the other end face side. When the exhaust gas passes through the partition walls, the porous partition walls function as a filter, and soot can be trapped. Incidentally, as trapped soot deposits on the partition walls, pressure loss increases, thereby straining the engine and decreasing fuel consumption and drivability. Therefore, soot is periodically combusted and removed by a heating means such as a heater for regeneration of the filter function. In order to promote combustion upon regeneration, the aforementioned metal having catalytic ability may be loaded on the honeycomb structure.

As the material for the honeycomb structure or honeycomb segment, there may be used one kind selected from the group consisting of cordierite, mullite, alumina, spinel, silicon carbide, metal silicon, silicon-silicon carbide composite material, silicon carbide-cordierite based composite material, silicon nitride, lithium aluminum silicate, and Fe-Cr-Al based metal; or a combination of a plurality of them.

### Example

Hereinbelow, the present invention will be described more specifically by Examples. However, the present invention is by no means limited to these Examples.

### [(Examples 1 to 6 and Comparative Examples 1 and 2)

### 1-1. Manufacture of honeycomb segment

As a honeycomb segment raw material, a SiC powder and a metal Si Powder were mixed together at a mass ratio of 80:20. To the mixture were added a starch, and a resin balloon as pore formers and further added methyl cellulose, hydroxypropoxylmethyl cellulose, a surfactant, and water to prepare kneaded clay having plasticity. The kneaded clay was subjected to extrusion forming and drying with microwaves and hot air to obtain a honeycomb segment formed article having a partition wall thickness of 310 µm, a cell density of about 46.5 cells/cm² (300 cells/in²), a square cross section having a side length of 35 mm, and a length of 152 mm. Both the end faces of the honeycomb segment formed article were subjected to plugging in such a manner that each end face showed a checkerwise pattern. That is, plugging was performed in such a manner that adjacent cells are plugged on mutually opposite side end portions. As the plugging material, a material similar to that for the honeycomb segment was used. After the plugging on both the end faces and drying, degreasing was performed at about 400°C in an ambient atmosphere. Then, firing was performed at about 1450°C in an Ar inert atmosphere to obtain a honeycomb segment in which SiC crystals are bonded by Si and having a porous structure.

### 2. Manufacture of bonding material

As the inorganic fibers, aluminosilicate fibers having an average length of 50 µm were used, all the shot rate was 50%. To mixture of 22 mass% colloidal silica as an inorganic binder, 1 mass% of clay, and SiC as inorganic particles was further added water. In some cases, organic binders (CMC, PVA), a resin balloon, and a dispersant were further added, followed by kneading for 30 minutes with a mixer to obtain a pasty bonding material.

### 3. Manufacture of coating material

To a mixture of 40 mass% of a SiC powder having an average diameter of 2 µm as the inorganic particles, 30 mass% of 40 mass% silica gel aqueous solution as the inorganic binder, 1 mass% of clay, and 29 mass% of fibers having properties shown in Table 1 as biosoluble fibers was added water, followed by kneading for 30 minutes with a mixer to obtain coating materials A to F having compositions and properties shown in Table 1. In addition, coating materials G or H was obtained by mixing aluminosilicate fibers or alumina fibers generally preferably used at the same mass proportion. These fibers had an average diameter of 5 µm and an average length of 50 µm.

**[Table 1]**

| | Fiber properties | | |
|---|---|---|---|
| Coating material No. | Thermal resistance (°C) | SiO₂ amount (wt%) | Alkali metal oxide amount (wt%) |
| A | 1260 | 70 | 0.5 |
| B | 1260 | 65 | 1.0 |
| C | 1000 | 60 | 1.2 |
| D | 1000 | 50 | 1.5 |
| E | 1260 | 60 | 3.0 |
| F | 700 | 40 | 10.0 |

In addition, from a pellet manufactured by drying slurry of the coating material, a bar-like sample of 3 mm × 4 mm × 40 mm was cut out, and four-point bending strength was measured according to JISR1601, porosity and bulk density were measured by the Archimedes method.

### 4. Manufacture of honeycomb structure using honeycomb segments

Next, 16 honeycomb segments were bonded by the use of the bonding material manufactured in the above 2. After drying at 200°C for two hours, the outer peripheral portion was ground in a cylindrical shape. There, a coating material manufactured in the above 3 was applied on the outer peripheral portion, followed by a thermal treatment at 500°C for two hours to obtain a honeycomb structure.

### 5. Evaluations and results thereof

Each of the honeycomb structures was attached to an exhaust pipe of a diesel engine, and soot was deposited up to 8 g/L to perform soot regeneration in such a manner that the central portion of the honeycomb structure had a temperature of 1200°C. A part of the coating material layer of the honeycomb structure after the test was cut out, and the shape of the fiber was observed with a scanning electron microscope (SEM). In addition, an external appearance of the coating material layer was observed with an optical microscope, and presence or absence of a crack was confirmed. The results are shown in Table 2.

**[Table 2]**

| Coating material No. | | Fiber shape | Coating material layer |
|---|---|---|---|
| Example 1 | A | No change | No crack |
| Example 2 | B | No change | No crack |
| Example 3 | C | Partial melt | No crack |
| Example 4 | D | Partial melt | Crack present |
| Example 5 | E | No change | Crack present |
| Example 6 | F | Partial melt | Crack present |
| Comp. Ex. 1 | G | No change | No crack |
| Comp. Ex. 2 | H | No change | No crack |

### (Examples 7 to 27)

Next, as coating materials No. 1 to 18, coating materials employing the same basic composition as that of the coating material A and further containing an organic binder, a resin balloon, a dispersant, SiC having a large average diameter, and the like to suitably change various properties are shown in Table 3.

**[Table 3]**

| Coating material No. | Inorganic fiber average length (µm) | Inorganic fiber average sectional diameter (µm) | Organic binder (mass%) | Coating material slurry pH | Porosity % | Bulk density g/cm³ | Others (mass%) |
|---|---|---|---|---|---|---|---|
| 1 | 50 | 5 | | 6.0 | 45 | 1.6 | Dispersant: 0.3 |
| | | | | | | | Resin balloon: 1.0 |
| 2 | 300 | 5 | | 6.0 | 50 | 1.4 | Dispersant: 0.5 |
| | | | | | | | Resin balloon: 1.0 |
| 3 | 500 | 5 | | 6.0 | 65 | 1.0 | Dispersant: 0.7 |
| | | | | | | | Resin balloon: 1.0 |
| 4 | 300 | 5 | CMC | 5.0 | 60 | 1.1 | Dispersant: 0.3 |
| | | | 0.1 | | | | Resin balloon: 1.0 |
| 5 | 300 | 5 | CMC | 5.0 | 60 | 1.1 | Dispersant: 0.3 |
| | | | 0.4 | | | | Resin balloon: 1.0 |
| 6 | 300 | 5 | CMC | 5.0 | 60 | 1.1 | Dispersant: 0.3 |
| | | | 0.8 | | | | Resin balloon: 1.0 |
| 7 | 200 | 5 | PVA | 1.0 | 60 | 1.1 | Resin balloon: 1.0 |
| | | | 1.0 | | | | pH adjusted by HCl |
| 8 | 300 | 5 | PVA | 8.0 | 60 | 1.1 | Resin balloon: 1.0 |
| | | | 1.0 | | | | pH adjusted by NaOH |
| 9 | 200 | 5 | | 4.8 | 50 | 1.6 | SiC particle diameter: 50 µm |
| 10 | 200 | 5 | | 4.8 | 47 | 1.8 | SiC particle diameter: 100 µm |
| 11 | 200 | 5 | | 4.7 | 42 | 2.0 | SiC particle diameter: 100 µm, increased from 40% to 60% |
| 12 | 5 | 0.05 | | 6.0 | 45 | 1.6 | Resin Balloon: 1.0 |
| 13 | 800 | 15 | | 6.0 | 72 | 0.8 | Resin Balloon: 1.0 |
| 14 | 50 | 5 | | 0.3 | 45 | 1.6 | Resin Balloon: 1.0 Resin Balloon: 1.0 pH adjusted by HCl |
| 15 | 50 | 5 | | 11 | 45 | 1.6 | Resin balloon: 1.0 |
| | | | | | | | pH adjusted by NaOH |
| 16 | 50 | 5 | | 6.0 | 80 | 0.4 | Resin balloon: 8.0 |
| 17 | 50 | 5 | | 6.0 | 35 | 3.1 | Silica gel → Alumina gel |
| | | | | | | | SiC → Alumina |
| 18 | 50 | 5 | | 4.5 | 35 | 2.5 | SiC particle diameter: 100 µm, increased from 60% to 90% |

Examples 7 to 27 are results of various tests of coating materials for a honeycomb structure, which is shown in Table 4. Each of the honeycomb structures obtained was subjected to regeneration efficiency measurement and a rapid cooling test (electric furnace spalling test E-sp). Hereinbelow, a test method of each test is shown.

[Four-point bending strength]: Using a sample cut out from the outer peripheral coating material layer or a sample cut out from a pellet obtained by drying and solidifying slurry of a coating material under the same conditions as in the drying step, measurement was performed according to JIS R 1601 "method for testing bending strength of fine ceramics".

[Thermal conductivity]: Using a sample cut out from the outer peripheral coating material layer or a sample cut out from a pellet obtained by drying and solidifying slurry of a coating material under the same conditions as in the drying step, measurement was performed by a laser flash method.

[Thermal expansion coefficient]: Using a sample cut out from the outer peripheral coating material layer or a sample cut out from a pellet obtained by drying and solidifying slurry of a coating material under the same conditions as in the drying step, it was calculated from thermal expansion rate at a temperature ranging from room temperature to 800°C.

[Heat capacity]: Using a sample cut out from the outer peripheral coating material layer or a sample cut out from a pellet obtained by drying and solidifying slurry of a coating material under the same conditions as in the drying step, it was calculated by multiplying specific heat obtained by a laser flash method or a differential heat flowmeter by density.

[Regeneration efficiency] test: A filter was connected with an exhaust gas pipe of a direct-injection 3 liter diesel engine, the engine was operated to deposit soot of 5 g/liter(L), and pressure loss was measured. Next, temperature of the honeycomb filter was raised to 600°C using a propane gas burner, and a bypass valve was shifted to obtain 18% oxygen concentration in the honeycomb filter, where a regeneration treatment of soot was started. After the 5 minutes from the start of the soot regeneration treatment, the temperature was lowered to 150°C to measure the weight of the soot and calculate the regeneration efficiency.

[E-Sp test: Electric furnace spalling test (quick cooling test)]: After the honeycomb structure was heated at 500°C for two hours in an electric furnace to obtain even temperature, the heated honeycomb structure was taken out from the electric furnace at room temperature to evaluate for thermal shock resistance by presence or absence of crack generation in the honeycomb structure. The case that no crack generation was recognized was evaluated as "excellent", the case that slight crack generation was recognized was evaluated as "good", and the case that a large amount of crack generation was recognized was evaluated as "bad".

**[Table 4]**

| | Coating material No. | 4-point bending strength KPa | Thermal conductivity W/mK | Thermal expansion coefficient ×10⁻⁶ | Heat capacity JM-3K-1 | Coating material layer thickness mm | Regeneration efficiency (%) | E-sp Test |
|---|---|---|---|---|---|---|---|---|
| Example 7 | 1 | 600 | 1.0 | 4.5 | 1000 | 0.5 | 95 | Excellent |
| Example 8 | 2 | 550 | 0.7 | 4.5 | 800 | 0.5 | 95 | Excellent |
| Example 9 | 3 | 400 | 0.5 | 4.5 | 700 | 0.5 | 95 | Excellent |
| Example 10 | 4 | 900 | 0.6 | 4.5 | 800 | 0.5 | 95 | Excellent |
| Example 11 | 5 | 1000 | 0.5 | 4.5 | 800 | 0.5 | 95 | Excellent |
| Example 12 | 6 | 1000 | 0.5 | 4.5 | 800 | 0.5 | 95 | Excellent |
| Example 13 | 7 | 500 | 0.5 | 4.5 | 800 | 0.5 | 95 | Excellent |
| Example 14 | 8 | 500 | 0.5 | 4.5 | 800 | 0.5 | 95 | Excellent |
| Example 15 | 9 | 1000 | 1.5 | 4.5 | 1100 | 0.5 | 94 | Excellent |
| Example 16 | 10 | 1300 | 2.0 | 4.5 | 1300 | 0.5 | 93 | Excellent |
| Example 17 | 11 | 1500 | 3.0 | 4.4 | 1300 | 0.5 | 93 | Excellent |
| Example 18 | 11 | 1500 | 3.0 | 4.4 | 1300 | 3 | 96 | Excellent |
| Example 19 | 1 | 600 | 1.0 | 4.5 | 1000 | 0.005 | 90 | Excellent |
| Example 20 | 1 | 600 | 1.0 | 4.5 | 1000 | 6 | 96 | Good |
| Example 21 | 12 | 300 | 0.9 | 4.5 | 1000 | 0.5 | 95 | Good |
| Example 22 | 13 | 300 | 0.8 | 4.5 | 680 | 0.5 | 95 | Excellent |
| Example 23 | 14 | 250 | 1.0 | 4.5 | 800 | 0.5 | 95 | Excellent |
| Example 24 | 15 | 250 | 1.0 | 4.5 | 800 | 0.5 | 95 | Excellent |
| Example 25 | 16 | 90 | 0.05 | 4.5 | 350 | 0.5 | 95 | Good |
| Example 26 | 17 | 1000 | 1.4 | 8.5 | 1500 | 0.5 | 95 | Good |
| Example 27 | 18 | 2000 | 11.0 | 4.3 | 1600 | 0.5 | 90 | Excellent |

### (Example 28)

### 1-2. Manufacture of honeycomb structure

As a honeycomb raw material, to 100 mass parts of ceramic raw material containing kaolin, talc, aluminum hydroxide, alumina, and silica at a proportion of 18.5 : 40 : 15 : 14 : 12.5, respectively, were added 8 mass parts of methylcellulose as an organic binder, 20 mass parts of commercially available poly(methyl methacrylate) (powder form) as a pore former, and 0.1 mass parts of fatty acid soap (potassium laurate) as a dispersant, and they were kneaded to obtain kneaded clay, which was subjected to extrusion forming and hot-air drying to obtain a honeycomb-structured ceramic formed article having a diameter of 300 mm, a length of 300 mm, a square cell shape of about 1.8 mm × 1.8 mm, a partition wall thickness of 0.3 mm, a cell density of about 30 cells/cm². The honeycomb formed article was subjected to plugging in both the end faces in such a manner that each end face showed a checkerwise pattern. That is, plugging was performed in such a manner that adjacent cells were plugged in mutually opposite side end portions. As the plugging materials, a material similar to that for the honeycomb raw material was used. After the plugging of both the end faces and drying, degreasing was performed at about 400°C in an ambient atmosphere, followed by firing at about 1430°C in an oxidation atmosphere to obtain an integral honeycomb structure having a cordierite crystal phase and a porous structure.

### 1-3. Manufacture of coating material for honeycomb structure

Six kinds of coating materials I to N were obtained by mixing 70 mass% of a cordierite powder having an average diameter of 20 µm as the inorganic particles, 20 mass% of a silica gel 40 mass% aqueous solution as the inorganic binder, 1 mass% of clay, 10 mass% of biosoluble fibers having characteristics shown in Table 1 and further adding water, followed by kneading for 30 minutes with a mixer.

Using the six kinds of coating materials I to N, the outer periphery of the integral honeycomb structure obtained in 1-2 was ground, and the coating materials I to N were applied on the outer periphery to perform the test and evaluation as in Examples 1 to 27. As a result, it was confirmed that influences on regeneration efficiency and thermal shock resistance were equivalent even if the material was cordierite.

As described, it was found out that a honeycomb structure durable in practical use can be obtained even by using biosoluble fibers usable without considering influences on a human body. In addition, it was found out that a honeycomb structure having properties equivalent to those of ceramic fibers suitably used in the past can be obtained.

### Industrial Applicability

A honeycomb structure of the present invention can suitably be used as a catalyst carrier making use of a catalytic function for an internal combustion engine, a boiler, a chemical reactor, a reformer for a fuel cell, or the like; a trapping filter for particulate matter in exhaust gas; etc.

## Claims

1. A honeycomb structure made of ceramic, wherein a coating material constituting an outer peripheral wall of the honeycomb structure contains biosoluble fibers.

2. The honeycomb structure according to Claim 1, wherein a plurality of honeycomb segments provided with a cell structure having a plurality of cells separated by porous partition walls and functioning as fluid passages and a porous outer wall disposed in an outer periphery of the cell structure are unitarily bonded by a bonding material at the outer walls.

3. The honeycomb structure according to Claim 1 or 2, wherein the biosoluble fibers has thermal resistance at a temperature of 1200°C or more.

4. The honeycomb structure according to any one of Claims 1 to 3, wherein the biosoluble fibers contains 60 to 95 mass% of SiO₂.

5. The honeycomb structure according to any one of Claims 1 to 4, wherein an alkali metal oxide content of the biosoluble fibers is 2 mass% or less.

6. The honeycomb structure according to any one of Claims 1 to 5, wherein the coating material contains inorganic particles and/or colloidal oxide.

7. The honeycomb structure according to any one of Claims 1 to 6, wherein the inorganic particles contained in the coating material is silicon carbide.

8. The honeycomb structure according to any one of Claims 1 to 7, wherein the coating material contains an inorganic binder.

9. The honeycomb structure according to any one of Claims 1 to 8, wherein the coating material contains an organic binder.

10. The honeycomb structure according to any one of Claims 1 to 9, wherein the biosoluble fibers have an average length of 10 to 600 µm and average diameter of 0.1 to 10 µm.

11. The honeycomb structure according to any one of Claims 1 to 10, wherein slurry of the coating material has a pH of 0.5 to 10.

12. The honeycomb structure according to any one of Claims 1 to 11, wherein the coating material has a four-point bending strength of 100 to 3000 kPa.

13. The honeycomb structure according to any one of Claims 1 to 12, wherein the coating material has a thermal conductivity of 0.1 to 10 w(mK)⁻¹.

14. The honeycomb structure according to any one of Claims 1 to 13, wherein the coating material has a thermal expansion coefficient of 1 to 8 × 10⁻⁶ K⁻¹.

15. The honeycomb structure according to any one of Claims 1 to 14, wherein the coating material has a heat capacity of 400 to 4500 J·m⁻³·K⁻¹.

16. The honeycomb structure according to any one of Claims 1 to 15, wherein the coating material has a porosity of 17 to 70%.

17. The honeycomb structure according to any one of Claims 1 to 16, wherein the coating material has a bulk density of 0.5 to 3 g·cm⁻³.

18. The honeycomb structure according to any one of Claims 1 to 17, wherein the coating material has a thickness of 0.01 to 5 mm.

19. A coating material having a thermal resistance of 1200°C or more and containing 60 to 95 mass% of SiO₂.
